# EUROPEAN PATENT APPLICATION

(11) **EP 4 601 357 A1**
(43) Date of publication of application: **13.08.2025**
(21) Application number: 23870767.3
(22) Date of filing: 26.09.2023
(51) Int. Cl.: H04W 28/06

(54) **METHOD AND APPARATUS USED IN COMMUNICATION NODE FOR WIRELESS COMMUNICATION**

(30) Priority: 27.09.2022 CN 202211183111
(71) Applicant: Apogee Networks, LLC, Dallas, TX 75201 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/121323
(87) International publication number: WO 2024/067538

(57) **Abstract**

Disclosed in the present application are a method and apparatus used in a communication node for wireless communication. The method comprises: a communication node operating a first radio signal on a first cell of a first base station, wherein the first radio signal carries at least a portion of bits of a first RLC PDU; the operation is reception, or the operation is transmission; and the first RLC PDU is associated with a first RLC bearer, and the first RLC bearer terminates at a second base station other than the first base station. Regarding the problem of data packet transmission based on multi-base-station cooperation, the present application provides a scheme for transmitting, by means of a first base station, an RLC PDU generated by a second base station. The scheme improves the quality of communication.

## Description

### Technical Field

The present application relates to a transmission method and apparatus in a wireless communication system, and in particular to a high-latency transmission method and apparatus.

### Background Art

Aiming at increasingly high communication demands, 3GPP (3rd Generation Partner Project) has carried out research on non-terrestrial network (NTN) communication technology, among which mobility is an important research aspect of an NTN.

### Summary of the Invention

When user equipment (UE) moves from a PCell (Primary Cell) to a neighboring cell, a handover (HO) process is triggered. During the handover, an RRC (Radio Resource Control) reconfiguration process needs to be performed, and a data plane transmission will be interrupted. Especially when the UE moves faster, the handover frequency will increase greatly, thereby affecting the service continuity of the UE. NTN cells have a larger coverage area. Using NTN cells as the PCell of the UE may effectively reduce the frequency of UE handover. However, since the transmission distance between satellite and UE is much greater than that in the terrestrial network (TN), the RTT (Round Trip Time) latency of one transmission in an NTN is much greater than that in a TN. Especially when the link quality is relatively poor, the probability of retransmission is greatly increased, and the latency difference between the NTN and the TN is more obvious. How to shorten the transmission latency of a high-latency network needs to be enhanced.

In response to the above problems, the present application provides a solution for data transmission. In the description of the above problems, the NR system is used as an example. The present application is also applicable to scenarios such as LTE systems. Further, although the present application provides a specific implementation method for a user plane, the present application can also be used in scenarios such as a control plane to achieve technical effects as those of the user plane. Further, although the original intention of the present application is for a Uu air interface, the present application can also be used for a PC5 interface. Further, although the original intention of the present application is for the scenario between the terminal and the base station, the present application is also applicable to a V2X (Vehicle-to-Everything) scenario, as well as the communication scenarios between the terminal and the relay and between the relay and the base station, achieving similar technical effects as those in the scenario between the terminal and the base station. Further, although the original intention of the present application is for the scenario between the terminal and the base station, the present application is also applicable to the communication scenario of the IAB (Integrated Access and Backhaul), achieving similar technical effects as those in the scenario between the terminal and the base station. Further, although the original intention of the present application is for the scenario of the terrestrial network, the present application is also applicable to the communication scenario of the non-terrestrial network (NTN), achieving similar technical effects as those in the scenario of the TN. In addition, the use of a unified solution for different scenarios also helps to reduce hardware complexity and cost.

As one embodiment, the interpretation of the terminologies in the present application refers to the definition of the specification protocols of the TS36 series of 3GPP.

As one embodiment, the interpretation of the terminologies in the present application refers to the definition of the specification protocols of the TS38 series of 3GPP.

As one embodiment, the interpretation of the terminologies in the present application refers to the definition of the specification protocols of the TS37 series of 3GPP.

As one embodiment, the interpretation of the terminologies in the present application refers to the definition of the specification protocols of IEEE (Institute of Electrical and Electronics Engineers).

It should be noted that, in an absence of conflict, embodiments and features in the embodiments of any node of the present application may be applied to any other node. In an absence of conflict, embodiments and features in the embodiments of the present application may be arbitrarily combined with each other.

The present application discloses a method used in a first node for wireless communication, comprising:
operating a first radio signal on a first cell of a first base station, the first radio signal carrying at least a portion of bits of a first RLC (Radio Link Control) PDU (Protocol Data Unit),
wherein the first RLC PDU is associated with a first RLC bearer, and the first RLC bearer terminates at a second base station other than the first base station.

As one embodiment, the operation is reception.

As one embodiment, the operation is transmission.

As one embodiment, the problem to be solved by the present application comprises: how the first base station and the second base station cooperate.

As one embodiment, the problem to be solved by the present application comprises: how to shorten the transmission latency of the high-latency network.

As one embodiment, the problem to be solved by the present application comprises: how to transmit the first RLC PDU.

As one embodiment, the characteristic of the above method comprises: an RLC PDU generated at the second base station is transmitted by means of the first base station.

As one embodiment, the characteristic of the above method comprises: the first radio signal carrying at least a portion of bits of the first RLC PDU is operated on the first cell of the first base station.

As one embodiment, the characteristic of the above method comprises: the first RLC bearer terminates at the second base station other than the first base station.

As one embodiment, the characteristic of the above method comprises: the first base station is one low-latency base station, and the second base station is one high-latency base station.

As one embodiment, the characteristic of the above method comprises: the first base station is one TN base station, and the second base station is one NTN base station.

As one embodiment, the characteristic of the above method comprises: data of a higher protocol layer generated at a high-latency base station are mapped to one lower protocol layer of a low-latency base station and transmitted by means of the low-latency base station, thereby effectively reducing the transmission latency.

As one embodiment, the benefit of the above method comprises: the control plane is retained in the high-latency base station, thereby reducing handover, and effectively ensuring coverage performance.

According to one aspect of the present application, the method comprises:
processing a first PDU at a first protocol layer,
wherein the first PDU comprises at least a portion of bits of a first RLC PDU, and the first PDU comprises a first data header; the first protocol layer is located below an RLC sublayer, and the first protocol layer is located above a MAC (Medium Access Control) sublayer; the first protocol layer terminates at the first base station; the first RLC PDU is generated at the RLC sublayer; the first radio signal carries at least a portion of bits of the first PDU.

According to one aspect of the present application, the method comprises:
processing a first MAC PDU at a MAC sublayer,
wherein the first MAC PDU comprises at least a first MAC SDU (Service Data Unit) and a first MAC subheader, the first MAC subheader comprises a first identifier, and the first identifier is used to indicate the first node; the first MAC SDU comprises at least a portion of bits of the first RLC PDU; the first radio signal carries the first MAC PDU.

According to one aspect of the present application, a first resource block is used to bear the first radio signal; the first resource block is configured for a plurality of user equipment; the first resource block belongs to the first cell.

According to one aspect of the present application, the method comprises:
receiving a first RRC message, the first RRC message indicating the first resource block.

According to one aspect of the present application, the method comprises:
transmitting a second radio signal; and
in response to the second radio signal being transmitted, receiving a third radio signal,
wherein the third radio signal is used to determine the first resource block.

The present application discloses a method used in a first base station for wireless communication, comprising:
operating a first radio signal on a first cell, the first radio signal carrying at least a portion of bits of a first RLC PDU,
wherein the first RLC PDU is associated with a first RLC bearer, and the first RLC bearer terminates at a second base station other than the first base station.

As one embodiment, the operation is reception.

As one embodiment, the operation is transmission.

According to one aspect of the present application, a first PDU is processed at a first protocol layer; the first PDU comprises at least a portion of bits of the first RLC PDU, and the first PDU comprises a first data header; the first protocol layer is located below an RLC sublayer, and the first protocol layer is located above a MAC sublayer; the first protocol layer terminates at the first base station; the first RLC PDU is generated at the RLC sublayer; the first radio signal carries at least a portion of bits of the first PDU.

According to one aspect of the present application, a first MAC PDU is processed at the MAC sublayer; the first MAC PDU comprises at least a first MAC SDU and a first MAC subheader, the first MAC subheader comprises a first identifier, and the first identifier is used to indicate the first node; the first MAC SDU comprises at least a portion of bits of the first RLC PDU; the first radio signal carries the first MAC PDU.

According to one aspect of the present application, a first resource block is used to bear the first radio signal; the first resource block is configured for a plurality of user equipment; the first resource block belongs to the first cell.

According to one aspect of the present application, the method comprises:
transmitting a first RRC message, the first RRC message indicating the first resource block.

According to one aspect of the present application, the method comprises:
receiving a second radio signal; and
in response to the second radio signal being received, transmitting a third radio signal,
wherein the third radio signal is used to determine the first resource block.

According to one aspect of the present application, the method comprises:
in response to receiving the first radio signal, transmitting a first message to the second base station; or in response to receiving a first message from the second base station, transmitting the first radio signal, wherein the first message carries at least a portion of bits of the first RLC PDU.

The present application discloses a method used in a second base station for wireless communication, comprising:
receiving a first message from a first base station, a first radio signal being used to trigger the first message,
wherein the first message carries at least a portion of bits of a first RLC PDU; the first RLC PDU is associated with a first RLC bearer, and the first RLC bearer terminates at the second base station; the first radio signal carries at least a portion of bits of the first RLC PDU.

The present application discloses a method used in a second base station for wireless communication, comprising:
transmitting a first RRC message, the first RRC message indicating the first resource block.

The present application discloses a method used in a second base station for wireless communication, comprising:
transmitting a first message to a first base station, the first message being used to trigger a first radio signal,
wherein the first message carries at least a portion of bits of a first RLC PDU; the first RLC PDU is associated with a first RLC bearer, and the first RLC bearer terminates at the second base station; the first radio signal carries at least a portion of bits of the first RLC PDU.

According to one aspect of the present application, the method comprises:
processing a first PDU at a first protocol layer,
wherein the first PDU comprises at least a portion of bits of the first RLC PDU, and the first PDU comprises a first data header; the first protocol layer is located below an RLC sublayer, and the first protocol layer is located above a MAC sublayer; the first protocol layer terminates at the first base station; the first RLC PDU is generated at the RLC sublayer; the first radio signal carries at least a portion of bits of the first PDU.

The present application discloses a first node used for wireless communication, comprising:
a first processing machine, operating a first radio signal on a first cell of a first base station, the first radio signal carrying at least a portion of bits of a first RLC PDU,
wherein the first RLC PDU is associated with a first RLC bearer, and the first RLC bearer terminates at a second base station other than the first base station.

As one embodiment, the operation is reception.

As one embodiment, the operation is transmission.

The present application discloses a first base station used for wireless communication, comprising:
a second processing machine, operating a first radio signal on a first cell, the first radio signal carrying at least a portion of bits of a first RLC PDU,
wherein the first RLC PDU is associated with a first RLC bearer, and the first RLC bearer terminates at a second base station other than the first base station.

As one embodiment, the operation is reception.

As one embodiment, the operation is transmission.

The present application discloses a second base station used for wireless communication, comprising:
a third processing machine, receiving a first message from a first base station, a first radio signal being used to trigger the first message,
wherein the first message carries at least a portion of bits of a first RLC PDU; the first RLC PDU is associated with a first RLC bearer, and the first RLC bearer terminates at the second base station; the first radio signal carries at least a portion of bits of the first RLC PDU.

The present application discloses a second base station used for wireless communication, comprising:
a third processing machine, transmitting a first message to a first base station, the first message being used to trigger a first radio signal,
wherein the first message carries at least a portion of bits of a first RLC PDU; the first RLC PDU is associated with a first RLC bearer, and the first RLC bearer terminates at the second base station; the first radio signal carries at least a portion of bits of the first RLC PDU.

As one embodiment, compared with the traditional method, the present application has the following advantages:
- . reducing transmission latency;
- . reducing handover;
- . ensuring coverage performance; and
- . improving UE communication quality.

### Brief Description of the Drawings

Other features, purposes and advantages of the present application will become more obvious by reading the detailed description of the non-limiting embodiments in the following drawings:
FIG. 1 shows a flowchart of transmission of a first radio signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of radio signal transmission according to one embodiment of the present application;
FIG. 6 shows a flowchart of radio signal transmission according to another embodiment of the present application;
FIG. 7 shows a flowchart of radio signal transmission according to still another embodiment of the present application;
FIG. 8 shows a flowchart of processing a first PDU at a first protocol layer according to one embodiment of the present application;
FIG. 9 shows a flowchart of processing a first MAC PDU at a MAC sublayer according to one embodiment of the present application;
FIG. 10 shows a schematic diagram of a first PDU according to one embodiment of the present application;
FIG. 11 shows a schematic diagram of a first MAC PDU according to one embodiment of the present application;
FIG. 12 shows a schematic diagram of a protocol stack according to one embodiment of the present application;
FIG. 13 shows a structural block diagram of a processing apparatus used in a first node according to one embodiment of the present application;
FIG. 14 shows a structural block diagram of a processing apparatus used in a first base station according to one embodiment of the present application;
FIG. 15 shows a structural block diagram of a processing apparatus used in a second base station according to one embodiment of the present application;
FIG. 16 shows a schematic diagram of a network architecture according to one embodiment of the present application.

### Detailed Description of Embodiments

The technical solution of the present application will be further described in detail below in conjunction with the drawings. It should be noted that, in an absence of conflict, embodiments and features in the embodiments of the present application may be arbitrarily combined with each other.

### Embodiment 1

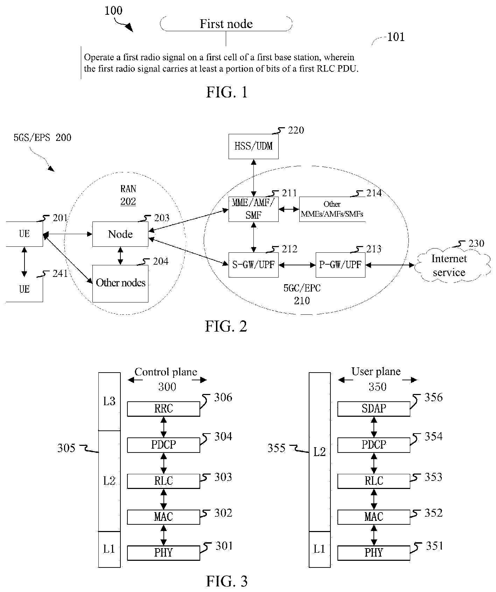

Embodiment 1 illustrates a flowchart of transmission of a first radio signal according to one embodiment of the present application, as shown in FIG. 1. In FIG. 1, each box represents one step, and it should be particularly emphasized that the order of the boxes in the figure does not represent the chronological relationship between the steps represented.

In Embodiment 1, a first node in the present application operates a first radio signal on a first cell of a first base station in step 101, the first radio signal carrying at least a portion of bits of a first RLC PDU, wherein the operation is reception, or the operation is transmission; the first RLC PDU is associated with a first RLC bearer, and the first RLC bearer terminates at a second base station other than the first base station.

As one embodiment, the first base station is a maintenance base station of the first cell.

As one embodiment, the first base station supports a non-3GPP protocol.

As one embodiment, the first base station supports an 802.11 protocol.

As one embodiment, the first base station supports a WiFi protocol.

As one embodiment, the first base station supports a Bluetooth (BT) protocol.

As one embodiment, the first base station supports a ZigBee protocol.

As one embodiment, the first base station is one TN base station.

As one embodiment, the first cell comprises radio resources of the first base station.

As one embodiment, the first cell is maintained by the first base station.

As one embodiment, the radio resources in the first cell are maintained by the first base station.

As one embodiment, the radio resources in the first cell are provided by the first base station.

As one embodiment, the radio resources in the first cell are allocated by the first base station.

As one embodiment, the first cell comprises time-frequency resources.

As one embodiment, the first cell comprises an area covered by the first base station.

As one embodiment, the first cell is one cell.

As one embodiment, the first cell is one servicing cell.

As one embodiment, the first cell is one servicing cell of the first node.

As one embodiment, the first cell is configured with a PCI.

As one embodiment, the first cell is configured with an SSB.

As one embodiment, the first cell is configured with radio resources.

As one embodiment, the first cell is configured with one cell identifier.

As one embodiment, the first cell is configured with at least one carrier.

As one embodiment, the first cell is configured with at least one BWP (Bandwidth Part).

As one embodiment, the first cell is not configured with a servicing cell identifier.

As one embodiment, the first cell is not an SpCell (Special Cell) of the first node.

As one embodiment, the first cell is not an SCell (Secondary Cell) of the first node.

As one embodiment, the first radio signal is a physical layer signal.

As one embodiment, the first radio signal is transmitted on an air interface.

As one embodiment, the first radio signal is transmitted on a wireless interface.

As one embodiment, the first radio signal is transmitted on a wired interface.

As one embodiment, the first radio signal is transmitted on a wired interface.

As one embodiment, the first radio signal is one TB (Transmission Block).

As one embodiment, the first radio signal is one TB initial transmission.

As one embodiment, the first radio signal is one TB retransmission.

As one embodiment, the first radio signal carries all bits of the first RLC PDU.

As one embodiment, the first radio signal carries a portion of bits of the first RLC PDU.

As one embodiment, the first radio signal carries at least one segment of the first RLC PDU.

As one embodiment, the first RLC PDU is generated according to the 3GPP TS 38.322 protocol.

As one embodiment, the first RLC PDU is assembled at an RLC layer.

As one embodiment, the first RLC PDU is one PDU of the RLC sublayer.

As one embodiment, the first RLC PDU comprises only an RLC SDU.

As one embodiment, the first RLC PDU comprises only one RLC SDU.

As one embodiment, the first RLC PDU comprises a plurality of RLC SDUs.

As one embodiment, the first RLC PDU comprises a plurality of RLC SDU segments.

As one embodiment, the first RLC PDU comprises an RLC SDU and an RLC header.

As one embodiment, the first RLC PDU comprises an RLC SDU and an RLC header.

As one embodiment, the first RLC PDU comprises one RLC SDU segment and one RLC header.

As one embodiment, the first RLC PDU is one RLC data PDU.

As one embodiment, the first RLC PDU is one RLC control PDU.

As one embodiment, the first RLC PDU is one TMD (Transparent Mode Data) PDU.

As one embodiment, the first RLC PDU is one UMD (Unacknowledged Mode Data) PDU.

As one embodiment, the first RLC PDU is one AMD (Acknowledged Mode Data) PDU.

As one embodiment, the first RLC PDU is one STATUS PDU.

As one embodiment, the first RLC PDU is transmitted by means of the first RLC bearer.

As one embodiment, the first RLC PDU is generated on an RLC entity to which the first RLC bearer belongs.

As one embodiment, the operation is reception.

As one sub-embodiment of this embodiment, the first radio signal is received on the first cell of the first base station.

As one sub-embodiment of this embodiment, the first radio signal is transmitted on a PDSCH.

As one sub-embodiment of this embodiment, the first radio signal comprises one PDSCH transmission.

As one sub-embodiment of this embodiment, the first radio signal is a downlink signal.

As one sub-embodiment of this embodiment, the first radio signal is a sidelink signal.

As one sub-embodiment of this embodiment, the first radio signal is a sidelink signal.

As one embodiment, the operation is transmission.

As one sub-embodiment of this embodiment, the first radio signal is transmitted on the first cell of the first base station.

As one sub-embodiment of this embodiment, the first radio signal is transmitted on a PUSCH.

As one sub-embodiment of this embodiment, the first radio signal comprises one PUSCH transmission.

As one sub-embodiment of this embodiment, the first radio signal is an uplink signal.

As one sub-embodiment of this embodiment, the first radio signal is a sidelink signal.

As one embodiment, the first RLC PDU is mapped to the first RLC bearer.

As one embodiment, the first RLC bearer is one RLC bearer.

As one embodiment, the first RLC bearer corresponds to one RLC entity of a first node and one RLC entity of the second base station.

As one embodiment, the first RLC bearer is configured for one RLC entity of the first node.

As one embodiment, the RLC entity corresponding to the first RLC bearer is used to process the first RLC PDU.

As one embodiment, the RLC entity corresponding to the first RLC bearer delivers the first RLC PDU to a lower layer.

As one embodiment, the RLC entity corresponding to the first RLC bearer receives the first RLC PDU from the lower layer.

As one embodiment, the first RLC bearer terminates at the second base station.

As one embodiment, the first RLC bearer terminates at the first node and the second base station.

As one embodiment, the first RLC bearer does not terminate at the first base station.

As one embodiment, the second base station is a maintenance base station of a primary cell (PCell) of the first node.

As one embodiment, the second base station is a maintenance base station of one servicing cell of the first node.

As one embodiment, the second base station is one servicing base station of the first node.

As one embodiment, the second base station is one IAB (Integrated Access and Backhaul) device.

As one embodiment, the second base station is one base station device.

As one embodiment, the second base station is one LTE base station.

As one embodiment, the second base station is one NR base station.

As one embodiment, the second base station is one gNB.

As one embodiment, the second base station is one eNB.

As one embodiment, the second base station is one MN (Master Node).

As one embodiment, the second base station is one SN (Secondary Node).

As one embodiment, the second base station is one NTN base station.

As one embodiment, the second base station comprises one NTN payload and one NTN gateway.

As one embodiment, the first base station and the first base station are not co-located.

As one embodiment, a type of the first base station is different from the type of the first base station.

As one embodiment, a distance between the second base station and the first node is greater than the distance between the first base station and the first node.

As one embodiment, the first base station is one NTN base station and the second base station is one TN base station.

As one embodiment, the first base station is one NTN base station and the second base station is one NTN base station.

As one embodiment, the first base station is an MN of the first node and the second base station is an SN of the first node.

As one embodiment, the first base station is an SN of the first node and the second base station is an MN of the first node.

As one embodiment, the first base station is not a serving base station of the first node and the second base station is a serving base station of the first node.

As one embodiment, the first base station is a serving base station of the first node and the second base station is a serving base station of the first node.

As one embodiment, the first base station supports a 3GPP protocol, and the second base station supports the 3GPP protocol.

As one embodiment, the first base station does not support the 3GPP protocol, and the second base station supports the 3GPP protocol.

As one embodiment, a first resource block is used to bear the first radio signal; the first resource block is configured for the first node; the first resource block belongs to the first cell.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown, the 5GS/EPS provides packet switching services, but those skilled in the art will readily appreciate that the various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point) or some other suitable terminologies. The node 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 by means of an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted by means of the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 is connected to the node 203 and the node 204 at the same time.

As one embodiment, a protocol stack of the UE201 terminates at the node 203 and the node 204.

As one embodiment, the UE201 corresponds to the first node in the present application.

As one embodiment, the UE201 is a piece of user equipment (UE).

As one embodiment, the node 203 corresponds to the first base station in the present application.

As one embodiment, the node 203 is one base station (BS) device.

As one embodiment, the node 203 is user equipment.

As one embodiment, the node 203 is one relay.

As one embodiment, the node 203 is a gateway.

As one embodiment, the node 203 supports transmission of a terrestrial Network.

As one embodiment, the node 203 supports transmission of a non-terrestrial network.

As one embodiment, the node 203 supports transmission in a network with a high-latency difference.

As one embodiment, the node 204 corresponds to the second base station in the present application.

As one embodiment, the node 204 is one base station device.

As one embodiment, the node 204 is user equipment.

As one embodiment, the node 204 is one relay.

As one embodiment, the node 204 is a gateway.

As one embodiment, the node 204 supports transmission of the terrestrial Network.

As one embodiment, the node 204 supports transmission of the non-terrestrial network.

As one embodiment, the node 204 supports transmission in a network with a high-latency difference.

As one embodiment, the node 203 and the node 204 are connected by means of an ideal backhaul.

As one embodiment, the node 203 and the node 204 are connected by means of a non-ideal backhaul.

As one embodiment, the node 203 and the node 204 provide radio resources for the UE201 at the same time.

As one embodiment, the node 203 and the node 204 do not provide radio resources for the UE201 at the same time.

As one embodiment, the node 203 and the node 204 are the same node.

As one embodiment, the node 203 and the node 204 are two different nodes.

As one embodiment, the node 203 and the node 204 are of the same type.

As one embodiment, the node 203 and the node 204 are of different types.

As one embodiment, multi-hop transmission is comprised between the node 203 and the node 204.

As one embodiment, there is direct transmission between the node 203 and the node 204.

As one embodiment, the user equipment supports transmission of the non-terrestrial network (NTN).

As one embodiment, the user equipment supports transmission of a terrestrial network (TN).

As one embodiment, the user equipment supports transmission in a network with a high-latency difference.

As one embodiment, the user equipment supports dual connection (DC) transmission.

As one embodiment, the user equipment comprises a handheld terminal.

As one embodiment, the user equipment comprises a wearable device.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device supporting low-latency and high-reliability transmission.

As one embodiment, the user equipment comprises a test device.

As one embodiment, the user equipment comprises a signaling tester.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a flying platform device.

As one embodiment, the base station device comprises a satellite device.

As one embodiment, the base station device comprises a macro cellular base station.

As one embodiment, the base station device comprises a micro cell base station.

As one embodiment, the base station device comprises a pico cell base station.

As one embodiment, the base station device comprises a Femtocell.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a layer 1, a layer 2, and a layer 3. The layer 1 (L1 layer) is the lowest layer and implements various PHY (physical layer) signal processing functions. The L1 layer will be referred to as a PHY301 herein. The layer 2 (L2 layer) 305 is above the PHY301 and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by means of encrypting data packets, and provides inter-cell mobility support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring lower layers using an RRC signaling. The radio protocol architecture for the user plane 350 comprises a layer 1 (L1 layer) and a layer 2 (L2 layer). The radio protocol architecture in the user plane 350 is substantially the same as the corresponding layers and sublayers in the control plane 300 for a physical layer 351, a PDCP sublayer 354 in a L2 layer 355, a RLC sublayer 353 in the L2 layer 355, and a MAC sublayer 352 in the L2 layer 355, but the PDCP sublayer 354 also provides header compression for the upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services.

As one embodiment, the radio protocol architecture in FIG. 3 is applicable to the first node in the present application.

As one embodiment, the radio protocol architecture in FIG. 3 is applicable to the first base station in the present application.

As one embodiment, the radio protocol architecture in FIG. 3 is applicable to the second base station in the present application.

As one embodiment, the first radio signal in the present application is generated at the PHY301 or PHY351.

As one embodiment, the second radio signal in the present application is generated at the MAC302 or MAC352.

As one embodiment, the second radio signal in the present application is generated at the PHY301 or PHY351.

As one embodiment, the third radio signal in the present application is generated at the MAC302 or MAC352.

As one embodiment, the third radio signal in the present application is generated at the PHY301 or PHY351.

As one embodiment, the first RRC message in the present application is generated at the RRC306.

As one embodiment, the first RLC PDU in the present application is generated at the RLC303 or RLC353.

As one embodiment, the first PDU in the present application is generated at a first protocol entity between the RLC303 and the MAC302 or a first protocol entity between the RLC353 and the MAC352.

As one embodiment, the first MAC PDU in the present application is generated at the MAC302 or MAC352.

### Embodiment 4

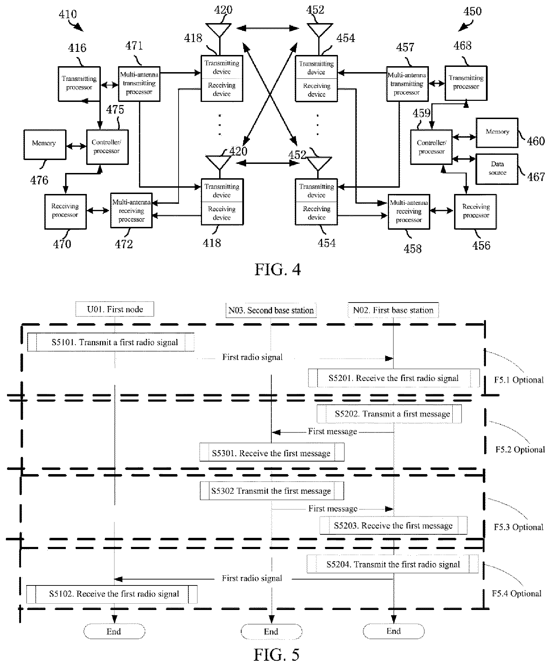

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions used for the L1 layer (i.e., the physical layer). The transmitting processor 416 implements encoding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the encoded and modulated symbols to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal by means of a corresponding antenna 452 thereof. Each receiving device 454 recovers information modulated onto a radio frequency carrier and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and a reference signal are demultiplexed by the receiving processor 456, wherein the reference signal will be used for a channel estimation, and the data signal is recovered after multi-antenna detection in the multi-antenna receiving processor 458 to recover any spatial stream destined for the first communication device 450. Symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer used for the user plane and the control plane. The controller/processor 459 is also responsible for retransmission of lost packets, and signalings to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by means of a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 may be provided to the core network.

As one embodiment, the first communication device 450 comprises: at least one processor and at least one memory, wherein the at least one memory comprises a computer program code; the at least one memory and the computer program code are configured to be used together with the at least one processor; the first communication device 450 at least: operates a first radio signal on a first cell of a first base station, the first radio signal carrying at least a portion of bits of a first RLC PDU, wherein the operation is reception, or the operation is transmission; the first RLC PDU is associated with a first RLC bearer, and the first RLC bearer terminates at a second base station other than the first base station.

As one embodiment, the first communication device 450 comprises: a memory storing a computer-readable instruction program, wherein the computer-readable instruction program generates an action when executed by at least one processor, the action comprising: operating a first radio signal on a first cell of a first base station, the first radio signal carrying at least a portion of bits of a first RLC PDU, wherein the operation is reception, or the operation is transmission; the first RLC PDU is associated with a first RLC bearer, and the first RLC bearer terminates at a second base station other than the first base station.

As one embodiment, the second communication device 410 comprises: at least one processor and at least one memory, wherein the at least one memory comprises a computer program code; the at least one memory and the computer program code are configured to be used together with the at least one processor. The second communication device 410 at least: a second processing machine operates a first radio signal on a first cell, the first radio signal carrying at least a portion of bits of a first RLC PDU, wherein the operation is transmission, or the operation is reception; the first RLC PDU is associated with a first RLC bearer, and the first RLC bearer terminates at a second base station other than the first base station.

As one embodiment, the second communication device 410 comprises: a memory storing a computer-readable instruction program, wherein the computer-readable instruction program generates an action when executed by at least one processor, the action comprising: operating, by a second processing machine, a first radio signal on a first cell, the first radio signal carrying at least a portion of bits of a first RLC PDU, wherein the operation is transmission, or the operation is reception; the first RLC PDU is associated with a first RLC bearer, and the first RLC bearer terminates at a second base station other than the first base station.

As one embodiment, at least one of the antenna 452, the receiving device 454, the receiving processor 456, and the controller/processor 459 is used to receive the first radio signal.

As one embodiment, at least one of the antenna 420, the transmitting device 418, the transmitting processor 416, and the controller/processor 475 is used to transmit the first radio signal.

As one embodiment, at least one of the antenna 452, the transmitting device 454, the transmitting processor 468, and the controller/processor 459 is used to transmit the first radio signal.

As one embodiment, at least one of the antenna 420, the receiving device 418, the receiving processor 470, and the controller/processor 475 is used to receive the first radio signal.

As one embodiment, at least one of the antenna 452, the transmitting device 454, the transmitting processor 468, and the controller/processor 459 is used to transmit a second radio signal.

As one embodiment, at least one of the antenna 420, the receiving device 418, the receiving processor 470, and the controller/processor 475 is used to receive the second radio signal.

As one embodiment, at least one of the antenna 452, the receiving device 454, the receiving processor 456, and the controller/processor 459 is used to receive a third radio signal.

As one embodiment, at least one of the antenna 420, the transmitting device 418, the transmitting processor 416, and the controller/processor 475 is used to transmit the third radio signal.

As one embodiment, at least one of the antenna 452, the receiving device 454, the receiving processor 456, and the controller/processor 459 is used to receive a first RRC message.

As one embodiment, at least one of the antenna 420, the transmitting device 418, the transmitting processor 416, and the controller/processor 475 is used to transmit the first RRC message.

As one embodiment, the first communication device 450 corresponds to the first node in the present application.

As one embodiment, the second communication device 410 corresponds to the first base station in the present application.

As one embodiment, the first communication device 450 is a piece of user equipment.

As one embodiment, the first communication device 450 is a piece of user equipment supporting the high-latency difference.

As one embodiment, the first communication device 450 is a piece of user equipment supporting the NTN.

As one embodiment, the first communication device 450 is one aircraft device.

As one embodiment, the first communication device 450 has a positioning capability.

As one embodiment, the first communication device 450 does not have a positioning capability.

As one embodiment, the first communication device 450 is a piece of user equipment supporting the TN.

As one embodiment, the second communication device 410 is one base station device.

As one embodiment, the second communication device 410 is one base station device supporting the TN.

As one embodiment, the second communication device 410 is one base station device supporting the NTN.

As one embodiment, the second communication device 410 is one base station device supporting the high-latency difference.

As one embodiment, the second communication device 410 is one satellite device.

As one embodiment, the second communication device 410 is one flying platform device.

As one embodiment, the second communication device 410 is one base station device supporting the TN.

As one embodiment, the second communication device 410 is one 802.11 device.

As one embodiment, the second communication device 410 is one gNB/eNB/ng-eNB.

### Embodiment 5

Embodiment 5 illustrates a flowchart of radio signal transmission according to one embodiment of the present application, as shown in FIG. 5. It should be particularly noted that the order in this example does not limit the signal transmission order and implementation order in the present application.

For **a first node U01**, in step S5101, a first radio signal is transmitted on a first cell of a first base station N02; and in step S5102, the first radio signal is received on the first cell of the first base station N02.

For **the first base station N02,** in step S5201, a first radio signal is received; in step S5202, a first message is transmitted; in step S5203, the first message is received; and in step S5204, the first radio signal is transmitted.

For **a second base station N03,** in step S5301, the first message is received; and in step S5302, the first message is transmitted.

In Embodiment 5, the first radio signal carries at least a portion of bits of a first RLC PDU; the first RLC PDU is associated with a first RLC bearer, and the first RLC bearer terminates at a second base station N03 other than the first base station N02; the first radio signal is used to trigger a first message, or a first message is used to trigger the first radio signal; the first message carries at least a portion of bits of the first RLC PDU.

As one embodiment, the first node U01 is a piece of user equipment.

As one embodiment, the first node U01 is one base station device.

As one embodiment, the first node U01 is one relay device.

As one embodiment, the first base station N02 is one base station device.

As one embodiment, the first base station N02 is a piece of user equipment.

As one embodiment, the first base station N02 is one relay device.

As one embodiment, the second base station N03 is one base station device.

As one embodiment, the second base station N03 is a piece of user equipment.

As one embodiment, the second base station N03 is one relay device.

As one embodiment, the first node U01 and the first base station N02 are connected by means of a Uu interface.

As one embodiment, the first node U01 and the first base station N02 are connected by means of an Xn interface.

As one embodiment, the first node U01 and the first base station N02 are connected by means of an X2 interface.

As one embodiment, the first node U01 and the first base station N02 are connected by means of a PC5 interface.

As one embodiment, the first node U01 and the first base station N02 are connected by means of an air interface.

As one embodiment, the first node U01 and the first base station N02 are connected by means of an NR Uu interface.

As one embodiment, the first node U01 and the second base station N03 are connected by means of the Uu interface.

As one embodiment, the first node U01 and the second base station N03 are connected by means of the Xn interface.

As one embodiment, the first node U01 and the second base station N03 are connected by means of the X2 interface.

As one embodiment, the first node U01 and the second base station N03 are connected by means of the PC5 interface.

As one embodiment, the first node U01 and the second base station N03 are connected by means of the air interface.

As one embodiment, the first node U01 and the second base station N03 are connected by means of the NR Uu interface.

As one embodiment, the first base station N02 and the second base station N03 are connected by means of the NR Uu interface.

As one embodiment, the first base station N02 and the second base station N03 are connected by means of the Uu interface.

As one embodiment, the first base station N02 and the second base station N03 are connected by means of the Xn interface.

As one embodiment, the first base station N02 and the second base station N03 are connected by means of an NG (Next Generation) interface.

As one embodiment, the first base station N02 and the second base station N03 are connected by means of the Xn interface and the NG interface.

As one embodiment, the first base station N02 and the second base station N03 are connected by means of a wired interface.

As one embodiment, the first base station N02 and the second base station N03 are connected by means of a wireless interface.

As one embodiment, multi-hop transmission is comprised between the first base station N02 and the second base station N03.

As one embodiment, single-hop transmission is comprised between the first base station N02 and the second base station N03.

As one embodiment, the first base station N02 and the second base station N03 are connected by means of an ideal backhaul.

As one embodiment, the first base station N02 and the second base station N03 are connected by means of a non-ideal backhaul.

As one embodiment, at least one base station device is comprised between the first base station N02 and the second base station N03.

As one embodiment, at least one AMF/UPF is comprised between the first base station N02 and the second base station N03.

As one embodiment, at least one IAB node is comprised between the first base station N02 and the second base station N03.

As one embodiment, at least a piece of user equipment is comprised between the first base station N02 and the second base station N03.

As one embodiment, at least one NG-RAN (Radio Access Network) node is comprised between the first base station N02 and the second base station N03.

As one embodiment, at least one 5GC (5G Core Network) node is comprised between the first base station N02 and the second base station N03.

Typically, the first node U01 is a piece of user equipment, the first base station N02 is one base station device, and the second base station N03 is one base station device.

Typically, the first node U01 is a piece of user equipment, the first base station N02 is a piece of user equipment, and the second base station N03 is one base station device.

Typically, the first node U01 is a piece of user equipment, the first base station N02 is one relay device, and the second base station N03 is one base station device.

Typically, the first node U01 is a piece of user equipment, the first base station N02 is a piece of user equipment, and the second base station N03 is a piece of user equipment.

Typically, the first node U01 is one base station device, the first base station N02 is one base station device, and the second base station N03 is one base station device.

Typically, the first node U01 is a piece of user equipment, the first base station N02 is one TN base station, and the second base station N03 is one NTN base station.

Typically, RTT between the first node U01 and the first base station N02 is shorter than the RTT between the first node U01 and the second base station N03.

As one embodiment, the second base station N03 transmits an SIB19 (System Information Block 19) message; the first node U01 receives the SIB19 message.

As one embodiment, the second base station N03 transmits an SIB1 (System Information Block 1) message; the first node U01 receives the SIB1 message.

As one embodiment, the second base station N03 transmits a PBCH (Physical Broadcast Channel) message; the first node U01 receives the PBCH message.

As one embodiment, the second base station N03 transmits an MIB message; the first node U01 receives the MIB message.

As one embodiment, a sender of the first message is the first base station N02, and a recipient of the first message is the second base station N03.

As one embodiment, the sender of the first message is the second base station N03, and the recipient of the first message is the first base station N02.

As one embodiment, the first message is directly transmitted by the first base station N02 to the second base station N03.

As one embodiment, the first message is indirectly transmitted by the first base station N02 to the second base station N03.

As one sub-embodiment of this embodiment, at least one base station device is comprised between the first base station N02 and the second base station N03.

As one sub-embodiment of this embodiment, a third base station device is comprised between the first base station N02 and the second base station N03.

As one sub-embodiment of this embodiment, the first message is directly transmitted by the first base station N02 to the third base station, and the third base station directly transmits the first message to the second base station N03.

As one embodiment, the first message is used to forward useful information bore by the first radio signal.

As one embodiment, the first message is directly transmitted by the second base station N03 to the first base station N02.

As one embodiment, the first message is indirectly transmitted by the second base station N03 to the first base station N02.

As one sub-embodiment of this embodiment, at least one base station device is comprised between the first base station N02 and the second base station N03.

As one sub-embodiment of this embodiment, a third base station device is comprised between the first base station N02 and the second base station N03.

As one sub-embodiment of this embodiment, the first message is directly transmitted by the second base station N03 to the third base station, and the third base station directly transmits the first message to the first base station N02.

As one embodiment, the first message is transmitted by means of an Xn interface.

As one embodiment, the first message is transmitted by means of an S1 interface.

As one embodiment, the first message is transmitted by means of an interface between the first base station N02 and the second base station N03.

As one embodiment, the first message comprises a physical layer signal.

As one embodiment, the first message comprises a MAC layer signaling.

As one embodiment, the first message comprises an RLC layer signaling.

As one embodiment, the first message comprises a PDCP layer signaling.

As one embodiment, the first message comprises an RRC layer signaling.

As one embodiment, the first message is transmitted by means of one L3 container.

As one embodiment, the first message is transmitted by means of one L2 container.

As one embodiment, the first message is transmitted by means of one inter-protocol interface.

As one embodiment, the first message is transmitted by means of one interface between a 3GPP protocol and a non-3GPP protocol.

As one embodiment, the first message comprises information of the second base station N03.

As one embodiment, the first message comprises an identifier of the second base station N03.

As one embodiment, the first message comprises information of the first node U01.

As one embodiment, the first message comprises an identifier of the first node U01.

As one embodiment, the first message comprises a PDU of the first protocol layer.

As one embodiment, the first message comprises an SDU of the first protocol layer.

As one embodiment, the first message comprises the first PDU.

As one embodiment, the first message is the first PDU.

As one embodiment, the first message comprises an SDU in the first PDU.

As one embodiment, the first message is an SDU in the first PDU.

As one embodiment, the first message comprises a portion of the first PDU other than the first data header.

As one embodiment, the first message is a portion of the first PDU other than the first data header.

As one embodiment, a dotted box F5.1 is optional.

As one embodiment, a dotted box F5.2 is optional.

As one embodiment, a dotted box F5.3 is optional.

As one embodiment, a dotted box F5.4 is optional.

As one embodiment, only one of the dotted box F5.1 and the dotted box F5.4 exists.

As one embodiment, the dotted box F5.1 exists and the dotted box F5.4 does not exist.

As one sub-embodiment of this embodiment, the first radio signal is transmitted on the first cell of the first base station N02.

As one embodiment, the dotted box F5.1 does not exist and the dotted box F5.4 exists.

As one sub-embodiment of this embodiment, the first radio signal is received on the first cell of the first base station N02.

As one embodiment, only one of the dotted box F5.2 and the dotted box F5.3 exists.

As one embodiment, the dotted box F5.2 exists, and the dotted box F5.1 exists.

As one sub-embodiment of this embodiment, the first radio signal is transmitted on the first cell of the first base station N02, and the first radio signal is used to trigger the first message.

As one embodiment, the dotted box F5.3 exists, and the dotted box F5.4 exists.

As one sub-embodiment of this embodiment, the first radio signal is received on the first cell of the first base station N02, and the first message is used to trigger the first radio signal.

As one embodiment, neither the dotted box F5.2 nor the dotted box F5.3 exists.

### Embodiment 6

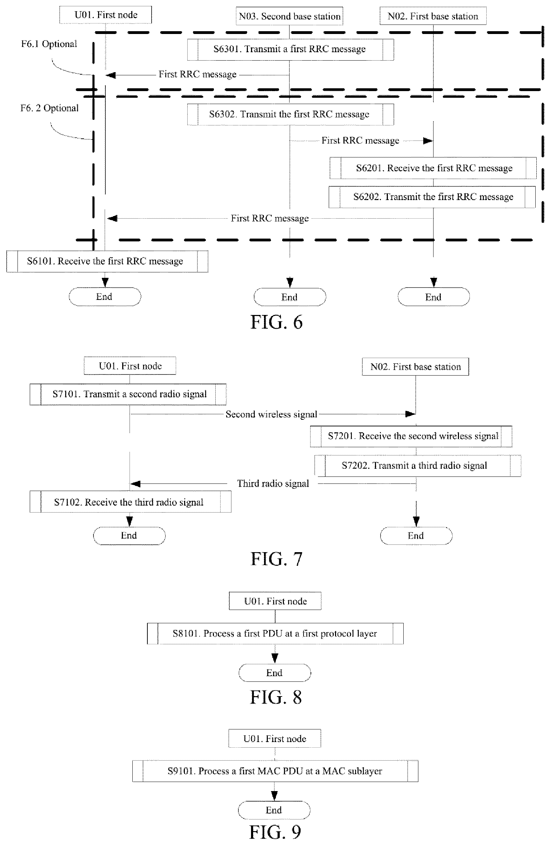

Embodiment 6 illustrates a flowchart of radio signal transmission according to another embodiment of the present application, as shown in FIG. 6. It should be particularly noted that the order in this example does not limit the signal transmission order and implementation order in the present application.

For **a first node U01**, in step S6101, a first RRC message is received.

For **a first base station N02,** in step S6201, the first RRC message is received; and in step S6202, the first RRC message is transmitted.

For **a second base station N03,** in step S6301, the first RRC message is transmitted; and in step S6302, the first RRC message is transmitted.

In Embodiment 6, the first RRC message indicates a first resource block; the first resource block is used to bear the first radio signal; the first resource block belongs to the first cell.

As one embodiment, the first node U01 determines the first resource block by means of monitoring.

As one embodiment, the first node U01 determines the first resource block by means of RSRP measurement.

As one embodiment, the first node U01 determines the first resource block by means of sensing.

As one embodiment, the first node U01 determines the first resource block by means of monitoring.

As one embodiment, a frequency band to which the first resource block belongs is an authorized frequency band.

As one embodiment, the frequency band to which the first resource block belongs is an unauthorized frequency band.

As one embodiment, the first resource block comprises time domain resources.

As one embodiment, the first resource block comprises frequency domain resources.

As one embodiment, the first resource block comprises code domain resources.

As one embodiment, the first resource block comprises spatial domain resources.

As one embodiment, the first resource block comprises time-frequency resources.

As one embodiment, the first resource block comprises at least one PRB (Physical Resource block).

As one embodiment, the first resource block comprises at least one VRB (Virtual resource block).

As one embodiment, the first resource block comprises a time-frequency resource block.

As one embodiment, the first resource block is not user equipment specific (UE Specific).

As one embodiment, the first resource block is not the first node U01 specific.

As one embodiment, the first resource block is the first cell specific (Cell Specific).

As one embodiment, the first resource block is a Configured grant.

As one embodiment, the first resource block is pre-configured.

As one embodiment, the first resource block is default.

As one embodiment, the first resource block is common.

As one embodiment, the first resource block is configured for uplink transmission.

As one embodiment, the first resource block is configured for one uplink (UL) BWP.

As one embodiment, the first resource block is configured for one uplink carrier.

As one embodiment, the first resource block is configured for one UL BWP of the first cell.

As one embodiment, the first resource block is configured for one uplink carrier of the first cell.

As one embodiment, the first resource block is configured for an active UL BWP of the first cell.

As one embodiment, the first resource block is configured for an initial UL BWP of the first cell.

As one embodiment, the first resource block is configured for a default UL BWP of the first cell.

As one embodiment, the first resource block is a PUSCH resource.

As one embodiment, the first resource block is configured for a PUSCH.

As one embodiment, the first resource block is configured for downlink transmission.

As one embodiment, the first resource block is configured for one downlink (DL) BWP.

As one embodiment, the first resource block is configured for one downlink carrier.

As one embodiment, the first resource block is configured for one DL BWP of the first cell.

As one embodiment, the first resource block is configured for one downlink carrier of the first cell.

As one embodiment, the first resource block is configured for an active DL BWP of the first cell.

As one embodiment, the first resource block is configured for an initial DL BWP of the first cell.

As one embodiment, the first resource block is configured for a default DL BWP of the first cell.

As one embodiment, the first resource block is a PDSCH resource.

As one embodiment, the first resource block is configured for a PDSCH.

As one embodiment, the first resource block is configured for IAB transmission.

As one embodiment, the first resource block is configured for sidelink (SL) transmission.

As one embodiment, the first resource block is configured for the first cell.

As one embodiment, the first resource block is scheduled by the first cell.

As one embodiment, the first resource block is maintained by the first cell.

As one embodiment, the first resource block is allocated by the first cell.

As one embodiment, the first resource block is configured for the first cell.

As one embodiment, the first resource block is configured for a plurality of user equipment.

As one embodiment, the first resource block is configured for a piece of user equipment.

As one embodiment, the first resource block is configured for the first node U01.

As one embodiment, the first resource block is configured for NTN user equipment.

As an embodiment, the first resource block is configured for user equipment configured with first information.

As one embodiment, the first information is configured in an SIB1 message.

As one embodiment, the first information is configured in an SIB19 message.

As one embodiment, the first resource block is configured for one HARQ process.

As one embodiment, the first resource block is configured for a plurality of HARQ processes.

As one embodiment, an HARQ process number of the HARQ process configured for the first resource block is equal to 0.

As one embodiment, the HARQ process number of the HARQ process configured for the first resource block is preconfigured.

As one embodiment, the HARQ process number of the HARQ process configured for the first resource block is predefined.

As one embodiment, the HARQ process number of the HARQ process configured for the first resource block is determined by the first node U01.

As one embodiment, the HARQ process number of the HARQ process configured for the first resource block is allocated by the second node.

As one embodiment, the first RRC message comprises time domain resource allocation of the first resource block.

As one embodiment, the first RRC message comprises frequency domain resource allocation of the first resource block.

As one embodiment, the first RRC message comprises an MCS (Modulation and coding scheme) configuration of the first resource block.

As one embodiment, the first RRC message comprises a DMRS (Demodulation Reference Signal) configuration of the first resource block.

As one embodiment, a sender of the first RRC message comprises the first base station N02.

As one embodiment, the sender of the first RRC message comprises the second base station N03.

As one embodiment, the sender of the first RRC message is the first base station N02.

As one embodiment, the sender of the first RRC message is the second base station N03.

As one embodiment, the second base station N03 transmits the first RRC message to the first base station N02, and the first base station N02 transmits the first RRC message to the first node U01.

As one embodiment, the first RRC message is generated by the second base station N03.

As one embodiment, the first RRC message comprises one broadcast message.

As one embodiment, the first RRC message comprises one unicast message.

As one embodiment, the first RRC message comprises one RRCReconfiguration message.

As one embodiment, the first RRC message comprises one SIB1 message.

As one embodiment, the first RRC message comprises one PUSCH-ConfigCommon IE.

As one embodiment, the first RRC message comprises one BWP-UplinkCommon IE.

As one embodiment, the first RRC message comprises one BWP-Uplink IE.

As one embodiment, the first RRC message comprises one UplinkConfigCommon IE.

As one embodiment, the first RRC message comprises one UplinkConfigCommonSIB IE.

As one embodiment, the first RRC message comprises one ServingCellConfigCommon IE.

As one embodiment, the first RRC message comprises one ServingCellConfigCommonSIB IE.

As one embodiment, the first RRC message comprises a first RRC sub-message, the first RRC sub-message comprises a second RRC sub-message, the first RRC sub-message is configured for a PCell of the first node U01, and the second RRC sub-message is configured for the first cell.

As one embodiment, the first RRC sub-message is an SIB1 message, and the second RRC sub-message is a PUSCH-ConfigCommon IE.

As one embodiment, the first RRC sub-message comprises at least one of the ServingCellConfigCommon IE or the ServingCellConfigCommonSIB IE or the UplinkConfigCommon IE or the UplinkConfigCommonSIB IE.

As one embodiment, the first RRC sub-message comprises at least one of the PUSCH-ConfigCommon IE or the BWP-UplinkCommon IE or the BWP-Uplink IE.

As one embodiment, the dotted box F6.1 is optional.

As one embodiment, the dotted box F6.2 is optional.

As one embodiment, only one of the dotted box F6.1 and the dotted box F6.2 exists.

### Embodiment 7

Embodiment 7 illustrates a flowchart of radio signal transmission according to still another embodiment of the present application, as shown in FIG. 7. It should be particularly noted that the order in this example does not limit the signal transmission order and implementation order in the present application.

For **a first node U01**, in step S7101, a second radio signal is transmitted; and in step S7102, in response to the second radio signal being transmitted, a third radio signal is received, and the third radio signal is used to determine a first resource block;

For **a first base station N02,** in step S7201, the second radio signal is received; and in step S7202, the third radio signal is transmitted.

In Embodiment 7, the third radio signal is used to determine the first resource block; the first resource block is used to bear the first radio signal; the first resource block belongs to the first cell.

As one embodiment, the second radio signal is used to request transmission on the first resource block.

As one embodiment, the second radio signal is an RTS (Request To Send) message.

As one embodiment, the second radio signal is one radio frame.

As one embodiment, the second radio signal is used to request radio resources in the first cell.

As one embodiment, the second radio signal is used to request the first resource block.

As one embodiment, the second radio signal is used to request a PUSCH.

As one embodiment, the second radio signal comprises a measurement result.

As one embodiment, the second radio signal indicates the first resource block.

As one embodiment, the second radio signal indicates an index of the first resource block.

As one embodiment, the second radio signal comprises one physical layer signal.

As one embodiment, the second radio signal comprises a positive integer number of bits.

As one embodiment, the second radio signal is transmitted on a PUCCH.

As one embodiment, the second radio signal is transmitted on the PUSCH.

As one embodiment, the second radio signal comprises a piece of UCI.

As one embodiment, the second radio signal is one Preamble.

As one embodiment, the third radio signal is used to determine whether transmission on the first resource block is allowed.

As one embodiment, the third radio signal is a CTS (Clear To Send) message.

As one embodiment, the third radio signal is one radio frame.

As one embodiment, the third radio signal is used to confirm the first resource block.

As one embodiment, the third radio signal is used to allocate the first resource block.

As one embodiment, the third radio signal indicates the first resource block.

As one embodiment, the third radio signal indicates an index of the first resource block.

As one embodiment, the third radio signal is used to determine to allocate the first resource block to the first node U01.

As one embodiment, the third radio signal is transmitted on a PDCCH.

As one embodiment, the third radio signal is transmitted on a PDSCH.

As one embodiment, the third radio signal is a piece of DCI.

As one embodiment, the third radio signal comprises a piece of DCI.

As one embodiment, the third radio signal comprises one RAR, and the one RAR indicates the first resource block.

As one embodiment, the second radio signal or the third radio signal indicates the first identifier.

As one embodiment, both the second radio signal or the third radio signal indicate the first identifier.

As one embodiment, neither the second radio signal nor the third radio signal indicates the first identifier.

### Embodiment 8

Embodiment 8 illustrates a flowchart of processing a first PDU at a first protocol layer according to one embodiment of the present application, as shown in FIG. 8.

For **a first node U01**, in step S8101, the first PDU is processed at the first protocol layer.

In Embodiment 8, the first PDU comprises at least a portion of bits of the first RLC PDU, and the first PDU comprises a first data header; the first radio signal carries at least a portion of bits of the first PDU; the first protocol layer terminates at the first base station.

As one embodiment, the first node U01 processes the first PDU at the first protocol layer.

As one embodiment, one protocol entity belonging to the first protocol layer in the first node U01 processes the first PDU at the first protocol layer.

As one embodiment, the first base station processes the first PDU at the first protocol layer.

As one embodiment, one protocol entity belonging to the first protocol layer in the first base station processes the first PDU at the first protocol layer.

As one embodiment, the first node U01 generates the first PDU at the first protocol layer, and the first base station receives the first PDU at the first protocol layer.

As one embodiment, the first base station generates the first PDU at the first protocol layer, and the first node U01 receives the first PDU at the first protocol layer.

As one embodiment, the "processing a first PDU at a first protocol layer" comprises: assembling the first PDU at the first protocol layer.

As one embodiment, the "processing a first PDU at a first protocol layer" comprises: adding the first data header at the first protocol layer.

As one embodiment, the "processing a first PDU at a first protocol layer" comprises: removing the first data header at the first protocol layer.

As one embodiment, the "processing a first PDU at a first protocol layer" comprises: generating the first PDU at the first protocol layer.

As one embodiment, the "processing a first PDU at a first protocol layer" comprises: receiving the first PDU at the first protocol layer.

As one embodiment, the "processing a first PDU at a first protocol layer" comprises: transmitting the first PDU at the first protocol layer.

As one embodiment, the "processing a first PDU at a first protocol layer" comprises: delivering the first PDU to a lower layer of the first protocol layer at the first protocol layer.

As one embodiment, the "processing a first PDU at a first protocol layer" comprises: receiving the first PDU from the lower layer of the first protocol layer.

As one embodiment, the lower layer of the first protocol layer is a MAC sublayer.

As one embodiment, the lower layer of the first protocol layer comprises a MAC sublayer.

As one embodiment, the lower layer of the first protocol layer comprises an LLC (Logic Link Control) sublayer.

As one embodiment, the lower layer of the first protocol layer comprises a physical layer.

As one embodiment, the first protocol layer is used for a control plane and a user plane.

As one embodiment, the first protocol layer is only used for a user plane in the control plane and the user plane.

As one embodiment, an SDU of the first protocol layer supports segmentation.

As one embodiment, the SDU of the first protocol layer does not support segmentation.

As one embodiment, a protocol layer above the first protocol layer belongs to the 3GPP protocol, and a protocol layer below the first protocol layer does not belong to the 3GPP protocol.

As one embodiment, the protocol layer above the first protocol layer belongs to the 3GPP protocol, and the protocol layer below the first protocol layer belongs to the 3GPP protocol.

As one embodiment, the first protocol layer is located between one 3GPP protocol layer and one non-3GPP protocol layer.

As one embodiment, the first protocol layer is one routing layer.

As one embodiment, the first protocol layer belongs to a Layer 2 (L2).

As one embodiment, the first protocol layer is one sublayer of the Layer 2 (L2).

As one embodiment, the first protocol layer is used to determine the mapping from an RLC sublayer to the MAC sublayer.

As one embodiment, the first protocol layer is used to determine the mapping from an RLC entity to a MAC entity.

As one embodiment, the first protocol layer is located below the RLC sublayer, and the first protocol layer is located above the MAC sublayer.

As one embodiment, the first protocol layer is located between the RLC sublayer and the MAC sublayer.

As one embodiment, at least one protocol layer is comprised between the RLC sublayer and the MAC sublayer.

As one embodiment, only the first protocol layer is comprised between the RLC sublayer and the MAC sublayer.

As one embodiment, the first PDU comprises at least one SDU of the first protocol layer.

As one embodiment, the first PDU comprises only one SDU of the first protocol layer.

As one embodiment, the first PDU comprises a plurality of SDUs of the first protocol layer.

As one embodiment, one SDU of the first protocol layer comprises at least one RLC PDU.

As one embodiment, one SDU of the first protocol layer comprises only one RLC PDU.

As one embodiment, one SDU of the first protocol layer comprises a plurality of RLC PDUs.

As one embodiment, one SDU of the first protocol layer comprises at least a segment of one RLC PDU.

As one embodiment, one SDU of the first protocol layer comprises at least one RLC PDU or a segment of one RLC PDU.

As one embodiment, one SDU of the first protocol layer comprises the RLC PDU or a segment of the RLC PDU.

As one embodiment, the first PDU comprises a portion of bits of the first RLC PDU.

As one embodiment, the first PDU comprises each bit of the first RLC PDU.

As one embodiment, the first PDU comprises one segment of the first RLC PDU.

As one embodiment, the first PDU comprises each bit of the first RLC PDU and the first data header.

As one embodiment, the first PDU comprises a portion of bits of the first RLC PDU and the first data header.

As one embodiment, the first data header comprises a positive integer number of octets.

As one embodiment, the first data header comprises a third identifier, and the third identifier is used to indicate the first node U01.

As one embodiment, the third identifier is allocated by the first base station to the first node U01.

As one embodiment, the third identifier is one user equipment identifier.

As one embodiment, the third identifier is one local Remote UE ID.

As one embodiment, the first data header comprises a fourth identifier, and the fourth identifier is used to indicate the second base station.

As one embodiment, the first data header comprises a fourth identifier, and the fourth identifier is used to indicate a primary cell of the first node U01.

As one embodiment, the fourth identifier is one base station device identifier.

As one embodiment, the fourth identifier is one user equipment identifier.

As one embodiment, the fourth identifier is one local Remote UE ID.

As one embodiment, the fourth identifier is one destination service access point (DSAP).

As one embodiment, the fourth identifier is one source service access point (SSAP).

As one embodiment, the fourth identifier is one destination service base station.

As one embodiment, the fourth identifier is one source service base station.

As one embodiment, the first data header comprises a fifth identifier, and the fifth identifier is used to indicate the first RLC bearer.

As one embodiment, the fifth identifier is an L2 U2N Remote UE end-to-end Uu Radio Bearer.

As one embodiment, the fifth identifier is an identifier of the first RLC bearer.

As one embodiment, the fifth identifier is an identifier of the first RLC bearer.

As one embodiment, the fifth identifier is an identifier of a radio bearer (RB) to which the first RLC bearer belongs.

As one embodiment, the fifth identifier is an identifier of a radio bearer (RB) between the first node U01 and the second base station.

As one embodiment, the first data header comprises at least one of the third identifier or the fourth identifier or the fifth identifier.

As one embodiment, the first radio signal carries all bits of the first PDU.

As one embodiment, the first radio signal carries a portion of bits of the first PDU.

As one embodiment, the first radio signal carries at least one segment of the first PDU.

As one embodiment, the fact that the first MAC SDU comprises at least a portion of bits of the first PDU is used to determine that the first radio signal carries at least a portion of bits of the first PDU.

As one embodiment, the fact that the first MAC SDU comprises at least a portion of bits of the first PDU is used to determine that the first radio signal carries at least a portion of bits of the first PDU.

As one embodiment, the first protocol layer terminates at the first node U01 and the first base station.

As one embodiment, the first node U01 comprises at least one protocol entity belonging to the first protocol layer.

As one embodiment, the first base station comprises at least one protocol entity belonging to the first protocol layer.

As one embodiment, the first node U01 and the first base station respectively comprise at least one protocol entity belonging to the first protocol layer.

As one embodiment, one protocol entity belonging to the first protocol layer comprised in the first node U01 is mapped to one protocol entity belonging to the first protocol layer comprised in the first base station.

As one embodiment, the first node U01 and the first base station comprise at least one peer-to-peer protocol entity for the first protocol layer.

As one embodiment, the first base station determines an SDU of the first protocol layer.

As one embodiment, the first base station processes the SDU of the first protocol layer.

As one embodiment, the first base station generates a PDU of the first protocol layer.

As one embodiment, the first base station transmits the PDU of the first protocol layer.

As one embodiment, the first base station receives the PDU of the first protocol layer.

### Embodiment 9

Embodiment 9 illustrates a flowchart of processing a first MAC PDU at a MAC sublayer according to one embodiment of the present application, as shown in FIG. 9.

For **a first node U01**, in step S9101, the first MAC PDU is processed at the MAC sublayer.

In Embodiment 9, the first MAC PDU comprises at least a first MAC SDU and a first MAC subheader, the first MAC subheader comprises a first identifier, and the first identifier is used to indicate the first node U01; the first MAC SDU comprises at least a portion of bits of the first RLC PDU; the first radio signal carries the first MAC PDU.

As one embodiment, the first node U01 generates the first MAC PDU at the MAC sublayer, and the first base station receives the first MAC PDU at the MAC sublayer.

As one embodiment, the first base station generates the first MAC PDU at the MAC sublayer, and the first node U01 receives the first MAC PDU at the MAC sublayer.

As one embodiment, the MAC sublayer terminates at the first base station.

As one embodiment, the MAC sublayer terminates at the first node U01 and the first base station.

As one embodiment, the first node U01 comprises at least one protocol entity belonging to the MAC sublayer.

As one embodiment, the first base station comprises at least one protocol entity belonging to the MAC sublayer.

As one embodiment, the first node U01 and the first base station respectively comprise at least one protocol entity belonging to the MAC sublayer.

As one embodiment, one protocol entity belonging to the MAC sublayer comprised in the first node U01 is mapped to one protocol entity belonging to the MAC sublayer comprised in the first base station.

As one embodiment, the first node U01 and the first base station comprise at least one peer-to-peer protocol entity for the MAC sublayer.

As one embodiment, the first MAC PDU comprises at least one MAC sub-PDU.

As one embodiment, the first MAC PDU comprises only one MAC sub-PDU.

As one embodiment, the first MAC PDU comprises a plurality of MAC sub-PDUs.

As one embodiment, the first MAC PDU comprises at least one MAC CE.

As one embodiment, the first MAC PDU does not comprise any MAC CE.

As one embodiment, any MAC sub-PDU in the first MAC PDU comprises one MAC SDU.

As one embodiment, any MAC sub-PDU in the first MAC PDU does not comprise a MAC CE.

As one embodiment, the first MAC subheader is located at the most significant bit in the first MAC PDU.

As one embodiment, the first MAC subheader occupies at least a first octet of the first MAC PDU.

As one embodiment, the first MAC subheader is located before the first MAC SDU.

As one embodiment, there is one MAC sub-PDU between the first MAC subheader and the first MAC SDU.

As one embodiment, there is at least one MAC sub-PDU between the first MAC subheader and the first MAC SDU.

As one embodiment, there is no MAC sub-PDU between the first MAC subheader and the first MAC SDU.

As one embodiment, the first MAC subheader belongs to the MAC sub-PDU to which the first MAC SDU belongs.

As one embodiment, the first MAC subheader does not belong to the MAC sub-PDU to which the first MAC SDU belongs.

As one embodiment, the MAC sub-PDU to which the first MAC SDU belongs comprises only one MAC subheader.

As one embodiment, the MAC sub-PDU to which the first MAC SDU belongs comprises a plurality of MAC subheaders.

As one embodiment, the first MAC PDU comprises at least the first MAC SDU, the first MAC subheader, and a second MAC subheader.

As one embodiment, the MAC sub-PDU to which the first MAC SDU belongs comprises the second MAC subheader.

As one embodiment, the MAC sub-PDU to which the first MAC SDU belongs does not comprise the second MAC subheader.

As one embodiment, the second MAC subheader comprises at least one octet.

As one embodiment, the second MAC subheader comprises one LCID (Logical Channel ID) field.

As one embodiment, the second MAC subheader comprises one eLCID (extended LCID) field.

As one embodiment, the second MAC subheader comprises one L (Length) field, and the L field indicates the length of the first MAC SDU.

As one embodiment, the second MAC subheader comprises one F (Format) field, and the F field indicates the length of the L field.

As one embodiment, the second MAC subheader comprises an R field.

As one embodiment, a format of the second MAC subheader refers to FIG. 6.1.2-1 of Section 6.1.2 of 3GPP TS 38.321.

As one embodiment, the format of the second MAC subheader refers to FIG. 6.1.2-2 of Section 6.1.2 of 3GPP TS 38.321.

As one embodiment, the format of the second MAC subheader refers to FIG. 6.1.2-3 of Section 6.1.2 of 3GPP TS 38.321.

As one embodiment, one MAC sub-PDU in the first MAC PDU comprises the first MAC SDU and the second MAC subheader.

As one embodiment, one MAC sub-PDU in the first MAC PDU comprises the first MAC SDU and the first MAC subheader.

As one embodiment, one MAC sub-PDU in the first MAC PDU comprises the first MAC SDU, the first MAC subheader and the second MAC subheader.

As one embodiment, the first MAC PDU comprises only the first MAC SDU and the first MAC subheader.

As an embodiment, the first MAC PDU comprises the first MAC SDU, the first MAC subheader and padding bits.

As one embodiment, the first MAC subheader does not comprise an LCID.

As one embodiment, the first MAC subheader comprises the LCID and the first identifier.

As one embodiment, the first MAC subheader comprises a first identifier field, and the first identifier field in the first MAC subheader indicates the first identifier.

As one embodiment, the first MAC subheader comprises a first identifier field, and the first identifier field in the first MAC subheader is set as the first identifier.

As one embodiment, the first MAC subheader comprises a first identifier field, and the first identifier field in the first MAC subheader corresponds to the first identifier.

As one embodiment, the first MAC subheader comprises a second identifier field, and the second identifier field in the first MAC subheader is used to indicate the first cell.

As one embodiment, the first MAC subheader does not comprise the second identifier field used to indicate the first cell.

As one embodiment, the first MAC subheader comprises a reserved field.

As one embodiment, the first MAC subheader does not comprise the reserved field.

As one embodiment, the reserved field is set to 0.

As one embodiment, the first MAC subheader comprises a format field.

As one embodiment, the format field indicates a format of the first MAC PDU.

As one embodiment, the first MAC subheader does not comprise the format field.

As one embodiment, the first MAC subheader comprises at least one of the first identifier field or the second identifier field or the format field or the reserved field.

As one embodiment, the first MAC subheader comprises the first identifier field.

As one embodiment, the first MAC subheader comprises the first identifier field and the reserved field.

As one embodiment, the first MAC subheader comprises the first identifier field, the second identifier field and the reserved field.

As one embodiment, the first MAC subheader comprises the first identifier field, the second identifier field, the format field and the reserved field.

As one embodiment, the first MAC subheader comprises a positive integer number of octets.

As one embodiment, the first identifier field comprises 1 octet.

As one embodiment, the first identifier field comprises 2 octets.

As one embodiment, the first identifier field comprises 3 octets.

As one embodiment, the first identifier is one identifier in a first candidate identifier set, and the first candidate identifier set comprises at least one identifier.

As one embodiment, the first candidate identifier set......

As one embodiment, the first identifier is allocated by the first base station.

As one embodiment, the first MAC SDU comprises each bit of the first RLC PDU.

As one embodiment, the first MAC SDU comprises a portion of bits of the first RLC PDU.

As one embodiment, the first MAC SDU comprises one segment of the first RLC PDU.

As one embodiment, the first MAC SDU comprises at least a portion of bits of the first PDU.

As one sub-embodiment of this embodiment, the first MAC SDU comprises each bit of the first PDU.

As one sub-embodiment of this embodiment, the first MAC SDU is the first PDU.

As one sub-embodiment of this embodiment, the first MAC SDU comprises a portion of bits of the first PDU.

As one sub-embodiment of this embodiment, the first MAC SDU comprises one segment of the first PDU.

As one embodiment, the fact that the first MAC SDU comprises at least a portion of bits of the first PDU and the first PDU comprises at least a portion of bits of the first RLC PDU is used to determine that the first MAC SDU comprises at least a portion of bits of the first RLC PDU.

As one embodiment, the first PDU does not exist.

As one embodiment, the first PDU exists.

As one embodiment, the first PDU is generated.

As one embodiment, the first PDU is not generated.

As one embodiment, the first radio signal comprises the first MAC PDU.

As one embodiment, the first radio signal bears the first MAC PDU.

As one embodiment, the first radio signal is a physical layer signal corresponding to the first MAC PDU.

As one embodiment, the first radio signal is generated by the first MAC PDU.

### Embodiment 10

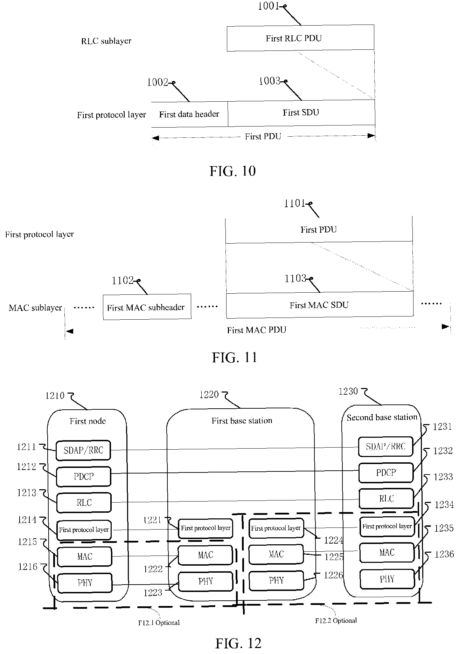

Embodiment 10 illustrates a schematic diagram of a first PDU according to one embodiment of the present application, as shown in FIG. 10. In FIG. 10, box 1001 represents a first RLC PDU, box 1002 represents a first data header, and box 1003 represents a first SDU.

In Embodiment 10, the first PDU comprises at least a portion of bits of the first RLC PDU, and the first PDU comprises a first data header.

As one embodiment, the first PDU comprises at least a portion of bits of the first RLC PDU and the first data header.

As one embodiment, the first SDU comprises the first RLC PDU.

As one embodiment, the first SDU comprises one segment of the first RLC PDU.

As one embodiment, the first SDU is an SDU of the first RLC PDU at the first protocol layer.

As one embodiment, the first SDU is an SDU of one segment of the first RLC PDU at the first protocol layer.

As one embodiment, the first SDU is one SDU of the first protocol layer.

As one embodiment, the first SDU is one SDU segment of the first protocol layer.

As one embodiment, the first SDU is the first RLC PDU from the RLC sublayer.

As one embodiment, the first SDU is one segment of the first RLC PDU from the RLC sublayer.

As one embodiment, it is particularly noted that the size and position of each box in this example do not limit the specific implementation of the data unit in the present application.

### Embodiment 11

Embodiment 11 illustrates a schematic diagram of a first MAC PDU according to one embodiment of the present application, as shown in FIG. 11. In FIG. 11, box 1101 represents a first PDU, box 1102 represents a first MAC subheader, and box 1103 represents a first MAC SDU.

In Embodiment 11, the first MAC PDU comprises at least the first MAC SDU and the first MAC subheader.

As one embodiment, the first MAC PDU comprises at least the first MAC SDU and the first MAC subheader.

As one embodiment, any ellipsis in the FIG. 11 is optional.

As one embodiment, any ellipsis in the FIG. 11 comprises at least one bit.

As one embodiment, any ellipsis in the FIG. 11 comprises any one of a MAC subheader or a MAC SDU or a MAC CE or a padding.

As one embodiment, an ellipsis on the left side of the FIG. 11 does not exist.

As one embodiment, the ellipsis on the left side of the FIG. 11 exists.

As one embodiment, the ellipsis in the middle of the FIG. 11 exists.

As one embodiment, the ellipsis in the middle of the FIG. 11 does not exist.

As one embodiment, the ellipsis on the right side of the FIG. 11 exists.

As one embodiment, the ellipsis on the right side of the FIG. 11 does not exist.

As one embodiment, the first PDU is one PDU of the first protocol layer.

As one embodiment, the first MAC SDU is one MAC SDU of a MAC sublayer.

As one embodiment, the first MAC SDU is one MAC SDU segment of the MAC sublayer.

As one embodiment, the first MAC SDU is the first PDU from the first protocol layer.

As one embodiment, the first MAC SDU is one segment of the first PDU from the first protocol layer.

As one embodiment, it is particularly noted that the size and position of each box in this example do not limit the specific implementation of the data unit in the present application.

### Embodiment 12

Embodiment 12 illustrates a schematic diagram of a protocol stack according to one embodiment of the present application, as shown in FIG. 12. In FIG. 12, box 1210 represents a first node, box 1220 represents a first base station, and box 1230 represents a second base station.

As one embodiment, the FIG. 12 is used for a control plane protocol stack or a user plane protocol stack.

As one embodiment, the FIG. 12 is only used for the user plane protocol stack.

As one embodiment, the FIG. 12 is used for the control plane protocol stack.

As one sub-embodiment of this embodiment, box 1211 represents an RRC of the first node 1210, and box 1231 represents the RRC of the second base station 1230; the FIG. 12 is used for the control plane protocol stack.

As one sub-embodiment of this embodiment, an RRC sublayer terminates between the first node 1210 and the second base station 1230; the FIG. 12 is used for the control plane protocol stack.

As one embodiment, the FIG. 12 is used for the user plane protocol stack.

As one sub-embodiment of this embodiment, box 1211 represents an SDAP of the first node 1210, and box 1231 represents an SDAP of the second base station 1230; the FIG. 12 is used for the user plane protocol stack.

As one sub-embodiment of this embodiment, an SDAP sublayer terminates between the first node 1210 and the second base station 1230; the FIG. 12 is used for the user plane protocol stack.

As one embodiment, a PDCP sublayer terminates between the first node 1210 and the second base station 1230.

As one embodiment, an RLC terminates between the first node 1210 and the second base station 1230.

As one embodiment, a first protocol layer terminates between the first node 1210 and a first base station 1220.

As one embodiment, a MAC sublayer terminates between the first node 1210 and the first base station 1220.

As one embodiment, a PHY layer terminates between the first node 1210 and the first base station 1220.

As one embodiment, the first radio signal in the present application is generated at the PHY1216 or PHY1223.

As one embodiment, the second radio signal in the present application is generated at the MAC1215.

As one embodiment, the second radio signal in the present application is generated at the PHY1216.

As one embodiment, the third radio signal in the present application is generated at the MAC 1222.

As one embodiment, the third radio signal in the present application is generated at the PHY1223.

As one embodiment, the first RRC message in the present application is generated at the RRC1231.

As one embodiment, the first RLC PDU in the present application is generated at the RLC1213 or RLC1233.

As one embodiment, the first PDU in the present application is generated at the first protocol layer 1214 or the first protocol layer 1221.

As one embodiment, the first MAC PDU in the present application is generated at the MAC1215 or MAC1222.

As one embodiment, a dotted box F12.1 is optional.

As one embodiment, the dotted box F12.1 exists.

As one sub-embodiment of this embodiment, the first protocol layer 1214 delivers the first PDU to the MAC1215.

As one sub-embodiment of this embodiment, the first protocol layer 1214 delivers at least one bit of the first PDU to the MAC1215.

As one sub-embodiment of this embodiment, the first protocol layer 1214 receives the first PDU from the MAC1215.

As one sub-embodiment of this embodiment, the first protocol layer 1214 receives at least one bit of the first PDU from the MAC1215.

As one embodiment, the dotted box F12.1 does not exist.

As one sub-embodiment of this embodiment, a protocol layer below the first protocol layer is mapped to a non-3GPP protocol stack.

As one sub-embodiment of this embodiment, the protocol layer below the first protocol layer is mapped to an 802.11 protocol stack.

As one sub-embodiment of this embodiment, the first protocol layer 1214 delivers the first PDU to one non-3GPP protocol entity.

As one sub-embodiment of this embodiment, the first protocol layer 1214 delivers at least one bit of the first PDU to one non-3GPP protocol entity.

As one sub-embodiment of this embodiment, the first protocol layer 1214 receives the first PDU from one non-3GPP protocol entity.

As one sub-embodiment of this embodiment, the first protocol layer 1214 receives at least one bit of the first PDU from one non-3GPP protocol entity.

As one embodiment, a dotted box F12.2 is optional.

As one embodiment, the dotted box F12.2 exists.

As one embodiment, the dotted box F12.2 does not exist.

### Embodiment 13

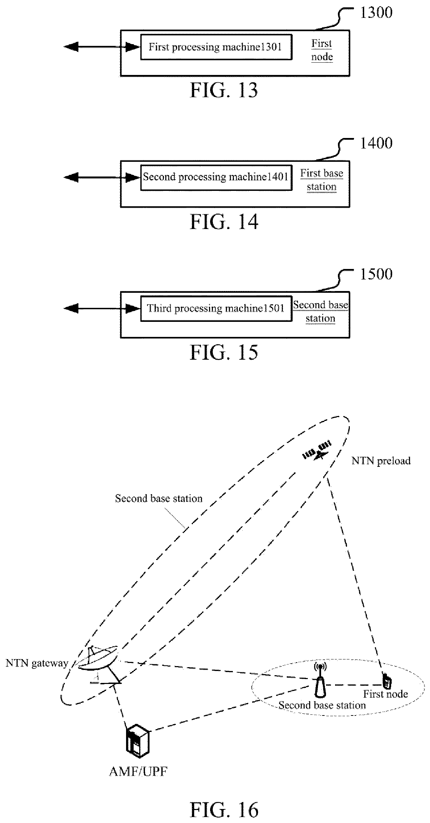

Embodiment 13 illustrates a structural block diagram of a processing apparatus used in a first node according to one embodiment of the present application; as shown in FIG. 13. In FIG. 13, a processing apparatus 1300 in the first node comprises a first processing machine 1301.

The first processing machine 1301 operates a first radio signal on a first cell of a first base station, and the first radio signal carries at least a portion of bits of a first RLC PDU;

in Embodiment 13, the first RLC PDU is associated with a first RLC bearer, and the first RLC bearer terminates at a second base station other than the first base station.

As one embodiment, the operation is reception.

As one embodiment, the operation is transmission.

As one embodiment, the first processing machine 1301 processes a first PDU at a first protocol layer, wherein the first PDU comprises at least a portion of bits of the first RLC PDU, and the first PDU comprises a first data header; the first protocol layer is located below an RLC sublayer, and the first protocol layer is located above a MAC sublayer; the first protocol layer terminates at the first base station; the first RLC PDU is generated at the RLC sublayer; the first radio signal carries at least a portion of bits of the first PDU.

As one embodiment, the first processing machine 1301 processes a first MAC PDU at the MAC sublayer, wherein the first MAC PDU comprises at least a first MAC SDU and a first MAC subheader, the first MAC subheader comprises a first identifier, and the first identifier is used to indicate the first node; the first MAC SDU comprises at least a portion of bits of the first RLC PDU; the first radio signal carries the first MAC PDU.

As one embodiment, a first resource block is used to bear the first radio signal; the first resource block is configured for a plurality of user equipment; the first resource block belongs to the first cell.

As one embodiment, the first processing machine 1301 receives a first RRC message; the first RRC message indicates the first resource block.

As one embodiment, the first processing machine 1301 transmits a second radio signal; and receives a third radio signal in response to the second radio signal being transmitted, wherein the third radio signal is used to determine the first resource block.

As one embodiment, the first processing machine 1301 comprises at least a first transmitter.

As one embodiment, the first processing machine 1301 comprises at least a first receiver.

As one embodiment, the first processing machine 1301 comprises at least a first transmitter and a first receiver.

As one embodiment, the first receiver comprises an antenna 452, a receiving device 454, a multi-antenna receiving processor 458, a receiving processor 456, a controller/processor 459, a memory 460 and a data source 467 in FIG. 4 of the present application.

As one embodiment, the first receiver comprises the antenna 452, the receiving device 454, the multi-antenna receiving processor 458 and the receiving processor 456 in FIG. 4 of the present application.

As one embodiment, the first receiver comprises the antenna 452, the receiving device 454 and the receiving processor 456 in FIG. 4 of the present application.

As one embodiment, the first transmitter comprises the antenna 452, a transmitting device 454, a multi-antenna transmitting processor 457, a transmitting processor 468, the controller/processor 459, the memory 460 and the data source 467 in FIG. 4 of the present application.

As one embodiment, the first transmitter comprises the antenna 452, the transmitting device 454, the multi-antenna transmitting processor 457 and the transmitting processor 468 in FIG. 4 of the present application.

As one embodiment, the first transmitter comprises the antenna 452, the transmitting device 454 and the transmitting processor 468 in FIG. 4 of the present application.

### Embodiment 14

Embodiment 14 illustrates a structural block diagram of a processing apparatus used in a first base station according to one embodiment of the present application, as shown in FIG. 14. In FIG. 14, a processing apparatus 1400 in the first base station comprises a second processing machine 1401.

The second processing machine 1401 operates a first radio signal on a first cell, and the first radio signal carries at least a portion of bits of a first RLC PDU;
in Embodiment 14, the first RLC PDU is associated with a first RLC bearer, and the first RLC bearer terminates at a second base station other than the first base station.

As one embodiment, the operation is reception.

As one embodiment, the operation is transmission.

As one embodiment, a first PDU is processed at a first protocol layer; the first PDU comprises at least a portion of bits of the first RLC PDU, and the first PDU comprises a first data header; the first protocol layer is located below an RLC sublayer, and the first protocol layer is located above a MAC sublayer; the first protocol layer terminates at the first base station; the first RLC PDU is generated at the RLC sublayer; the first radio signal carries at least a portion of bits of the first PDU.

As one embodiment, a first MAC PDU is processed at the MAC sublayer; the first MAC PDU comprises at least a first MAC SDU and a first MAC subheader, the first MAC subheader comprises a first identifier, and the first identifier is used to indicate the first node; the first MAC SDU comprises at least a portion of bits of the first RLC PDU; the first radio signal carries the first MAC PDU.

As one embodiment, a first resource block is used to bear the first radio signal; the first resource block is configured for a plurality of user equipment; the first resource block belongs to the first cell.

As one embodiment, the second processing machine 1401 transmits a first RRC message; the first RRC message indicates the first resource block.

As one embodiment, the second processing machine 1401 receives a second radio signal; and transmits a third radio signal in response to the second radio signal being received, wherein the third radio signal is used to determine the first resource block.

As one embodiment, the second processing machine 1401 transmits the second radio signal to the second base station in response to receiving the first radio signal; or transmits the first radio signal in response to receiving the second radio signal from the second base station; the second radio signal carries at least a portion of bits of the first RLC PDU.

As one embodiment, the second processing machine 1401 comprises at least a second transmitter.

As one embodiment, the second processing machine 1401 comprises at least a second receiver.

As one embodiment, the second processing machine 1401 comprises at least the second transmitter and the second receiver.

As one embodiment, the second transmitter comprises an antenna 420, a transmitting device 418, a multi-antenna transmitting processor 471, a transmitting processor 416, a controller/processor 475 and a memory 476 in FIG. 4 of the present application.

As one embodiment, the second transmitter comprises the antenna 420, the transmitting device 418, the multi-antenna transmitting processor 471 and the transmitting processor 416 in FIG. 4 of the present application.

As one embodiment, the second transmitter comprises the antenna 420, the transmitting device 418 and the transmitting processor 416 in FIG. 4 of the present application.

As one embodiment, the second receiver comprises the antenna 420, a receiving device 418, a multi-antenna receiving processor 472, a receiving processor 470, the controller/processor 475 and the memory 476 in FIG. 4 of the present application.

As one embodiment, the second receiver comprises the antenna 420, the receiving device 418, the multi-antenna receiving processor 472 and receiving processor 470 in FIG. 4 of the present application.

As one embodiment, the second receiver comprises the antenna 420, the receiving device 418 and the receiving processor 470 in FIG. 4 of the present application.

### Embodiment 15

Embodiment 15 illustrates a structural block diagram of a processing apparatus in a second base station according to one embodiment of the present application, as shown in FIG. 15. In FIG. 15, a processing apparatus 1500 in a first node comprises a third processing machine 1501.

The third processing machine 1501 receives a first message from a first base station, a first radio signal being used to trigger the first message; or transmits the first message to the first base station, the first message being used to trigger the first radio signal;
in Embodiment 15, the first message carries at least a portion of bits of a first RLC PDU; the first RLC PDU is associated with a first RLC bearer, and the first RLC bearer terminates at the second base station; the first radio signal carries at least a portion of bits of the first RLC PDU.

As one embodiment, the third processing machine 1501 processes a first PDU at a first protocol layer, wherein the first PDU comprises at least a portion of bits of the first RLC PDU, and the first PDU comprises a first data header; the first protocol layer is located below an RLC sublayer, and the first protocol layer is located above a MAC sublayer; the first protocol layer terminates at the first base station; the first RLC PDU is generated at the RLC sublayer; the first radio signal carries at least a portion of bits of the first PDU.

As one embodiment, the third processing machine 1501 transmits a first RRC message; the first RRC message indicates the first resource block.

As one embodiment, the third processing machine 1501 comprises at least a third transmitter.

As one embodiment, the third processing machine 1501 comprises at least a third receiver.

As one embodiment, the third processing machine 1501 comprises at least the third transmitter and the third receiver.

As one embodiment, the third transmitter comprises an antenna 420, a transmitting device 418, a multi-antenna transmitting processor 471, a transmitting processor 416, a controller/processor 475 and a memory 476 in FIG. 4 of the present application.

As one embodiment, the third transmitter comprises the antenna 420, the transmitting device 418, the multi-antenna transmitting processor 471 and the transmitting processor 416 in FIG. 4 of the present application.

As one embodiment, the third transmitter comprises the antenna 420, the transmitting device 418 and the transmitting processor 416 in FIG. 4 of the present application.

As one embodiment, the third receiver comprises the antenna 420, a receiving device 418, a multi-antenna receiving processor 472, a receiving processor 470, the controller/processor 475 and the memory 476 in FIG. 4 of the present application.

As one embodiment, the third receiver comprises the antenna 420, the receiving device 418, the multi-antenna receiving processor 472 and the receiving processor 470 in FIG. 4 of the present application.

As one embodiment, the third receiver comprises the antenna 420, the receiving device 418 and the receiving processor 470 in FIG. 4 of the present application.

### Embodiment 16

Embodiment 16 illustrates a schematic diagram of a network architecture according to one embodiment of the present application, as shown in FIG. 16. In FIG. 16, a second base station is one NTN base station, a first base station is one TN base station, the second base station comprises an NTN preload and an NTN gateway, the NTN gateway is connected to an AMF/UPF, a radio link between a first node and the NTN preload is an NTN service link of the first node, and the first node and the NTN preload are connected by means of a Uu interface.

As one embodiment, the first node and the first base station are connected by means of the Uu interface.

As one embodiment, the first base station is connected to the AMF (Access and Mobility Management Function)/UPF (User Plane Function).

As one embodiment, the first base station is connected to the NTN gateway.

As one embodiment, it should be particularly noted that this example does not limit the types of the first base station and the second base station, the interface between the first base station and the second base station, whether there are other devices between the first base station and the second base station, and the interface between the first node and the second base station.

Those skilled in the art can understand that all or part of the steps in the above methods can be completed by instructing the relevant hardware by means of a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminal and UE of the present application include, but are not limited to drones, communication modules on drones, remote-controlled aircrafts, aircrafts, small aircrafts, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes, but is not limited to, macro cellular base stations, micro cellular base stations, Femtocells, relay base stations, gNBs (NR node B), TRPs (Transmitter Receiver Points) and other wireless communication devices.

The above is only a preferred embodiment of the present application and is not used to limit the scope of protection of the present application. Any modifications, equivalent replacements, improvements, etc. made within the spirit and principles of the present application should be comprised in the scope of protection of the present application.

## Claims

1. A first node for wireless communication, comprising:
a first processor, operating a first radio signal on a first cell of a first base station, the first radio signal carrying at least a portion of bits of a first RLC PDU,
wherein the operation is reception, or the operation is transmission; and the first RLC PDU is associated with a first RLC bearer, and the first RLC bearer terminates at a second base station other than the first base station.

2. The first node according to claim 1, comprising:
the first processor, processing a first PDU at a first protocol layer,
wherein the first PDU comprises at least a portion of the bits of the first RLC PDU, and the first PDU comprises a first data header; the first protocol layer is located below an RLC sublayer, and the first protocol layer is located above an MAC sublayer; the first protocol layer terminates at the first base station; the first RLC PDU is generated at the RLC sublayer; and the first radio signal carries at least a portion of bits of the first PDU.

3. The first node according to claim 1 or 2, comprising:
the first processor, processing a first MAC PDU at the MAC sublayer,
wherein the first MAC PDU comprises at least a first MAC SDU and a first MAC subheader, the first MAC subheader comprises a first identifier, and the first identifier is used to indicate the first node; the first MAC SDU comprises at least a portion of the bits of the first RLC PDU; and the first radio signal carries the first MAC PDU.

4. The first node according to any one of claims 1 to 3, wherein a first resource block is used to bear the first radio signal; the first resource block is configured for a plurality of user equipments; and the first resource block belongs to the first cell.

5. The first node according to claim 4, comprising:
the first processor, receiving a first RRC message, the first RRC message indicating the first resource block.

6. The first node according to claim 4 or 5, comprising:
the first processor, transmitting a second radio signal; and in response to the second radio signal being transmitted, receiving a third radio signal,
wherein the third radio signal is used to determine the first resource block.

7. The first node according to any one of claims 1 to 6, wherein the first radio signal is used to trigger a first message, or the first message is used to trigger the first radio signal; and the first message carries at least a portion of the bits of the first RLC PDU.

8. A first base station for wireless communication, comprising:
a second processor, operating a first radio signal on a first cell, the first radio signal carrying at least a portion of bits of a first RLC PDU,
wherein the operation is transmission, or the operation is reception; and the first RLC PDU is associated with a first RLC bearer, and the first RLC bearer terminates at a second base station other than the first base station.

9. A second base station for wireless communication, comprising:
a third processor, receiving a first message from a first base station, a first radio signal being used to trigger the first message, or transmitting a first message to a first base station, the first message being used to trigger a first radio signal,
wherein the first message carries at least a portion of bits of a first RLC PDU; the first RLC PDU is associated with a first RLC bearer, and the first RLC bearer terminates at the second base station; and the first radio signal carries at least a portion of the bits of the first RLC PDU.

10. A method used in a first node for wireless communication, comprising:
operating a first radio signal on a first cell of a first base station, the first radio signal carrying at least a portion of bits of a first RLC PDU,
wherein the operation is reception, or the operation is transmission; and the first RLC PDU is associated with a first RLC bearer, and the first RLC bearer terminates at a second base station other than the first base station.

11. A method used in a first base station for wireless communication, comprising:
operating a first radio signal on a first cell, the first radio signal carrying at least a portion of bits of a first RLC PDU,
wherein the operation is transmission, or the operation is reception; and the first RLC PDU is associated with a first RLC bearer, and the first RLC bearer terminates at a second base station other than the first base station.

12. A method used in a second base station for wireless communication, comprising:
receiving a first message from a first base station, a first radio signal being used to trigger the first message, or transmitting a first message to a first base station, the first message being used to trigger a first radio signal,
wherein the first message carries at least a portion of bits of a first RLC PDU; the first RLC PDU is associated with a first RLC bearer, and the first RLC bearer terminates at the second base station; and the first radio signal carries at least a portion of the bits of the first RLC PDU.
